# DEMANDE DE BREVET EUROPEEN

(11) **EP 2 154 550 A1**
(43) Date de publication de la demande: **17.02.2010**
(21) Numéro de dépôt: 09167546.2
(22) Date de dépôt: 10.08.2009
(51) Int. Cl.: G01T 1/24

(54) **Détecteur de rayons X capable de mesurer une modulation d'un faisceau de rayons X à des fréquences micro-ondes**

(30) Priorité: 13.08.2008 FR 0855566
(71) Demandeur: European Synchrotron Radiation Facility, 38043 Grenoble Cedex 09 (FR)
(72) Inventeur: Goulon, José, 38700, CORENC (FR); Goujon, Gérard, 38770, LA MOTTE D'AVEILLANS (FR); Rogalev, Andrei, 38140, RIVES (FR); Wilhelm, Fabrice, 38120, SAINT EGREVE (FR)
(74) Mandataire: de Beaumont, Michel

(57) **Abrégé**

L'invention concerne un détecteur de paquets périodiques de photons X, chaque paquet ayant une durée inférieure à 0,1 nanoseconde, comprenant un capteur (20) comportant un élément semiconducteur de type III-V polarisé dans une région de résistance différentielle négative, ledit capteur étant disposé dans une cavité résonante (21) accordée sur un multiple (k) de la fréquence de répétition (F1) des paquets.

## Description

### Domaine de l'invention

La présente invention concerne un détecteur de rayons X capable de mesurer une modulation d'un faisceau de rayons X à des fréquences micro-ondes de 1 à 200 GHz, l'amplitude de cette modulation pouvant être très faible, soit par exemple -100 dB en dessous du niveau de signal continu.

La présente invention permettra plus particulièrement de mesurer les composantes de Fourier de très haute fréquence d'une source périodique pulsée de rayons X dont l'émission est constituée de paquets de photons X d'une durée inférieure au dixième de nanoseconde. Ces photons X auront une énergie de 2 à 20 keV, le nombre de photons X par paquet variant de 10³ à 10⁸. Ces paquets se répéteront à une fréquence dépendant de la technologie de la source utilisée : elle sera au plus de quelques MHz pour un laser X à électrons libres mais de plus de 350 MHz pour un accélérateur de type anneau de stockage.

Les capteurs de rayons X les plus classiques comprennent des photodiodes au silicium dont la rapidité est limitée à 1 GHz par leurs capacités de jonction tandis que leur gamme dynamique à haute fréquence ne dépasse pas 30 à 50 dB. Pour des mesures résolues en temps et non en fréquences, on utilise aussi des diodes AsGa ou diamant plus rapides, mais leur gamme dynamique est également insuffisante (30 dB) tandis que les temps de descente sont contaminés par des composantes lentes d'une durée de plus de 0.1 (diamant) à 1 ns (GaAs).

La présente invention s'applique à l'étude par absorption, diffusion ou diffraction des rayons X de la réponse d'un échantillon soumis à une perturbation déterministe dépendant du temps avec une précision qui peut être de quelques picosecondes, par exemple de l'ordre de 2 à 5 ps (ou de 500 à 200 GHz si on se place dans le domaine fréquentiel).

La présente invention s'applique à l'étude par absorption, diffusion ou diffraction des rayons X de la réponse d'un échantillon soumis à une perturbation déterministe dépendant du temps. Il pourra s'agir soit d'une modulation aux fréquences micro-ondes indiquées, soit d'impulsions périodiques d'une durée de quelques picosecondes et dont le spectre en fréquences contiendra des composantes de Fourier dans tout le domaine micro-onde, de 1 à 200 GHz.

On considère ici le cas d'une source de rayons X de très haute brillance spectrale. Il pourra s'agir du rayonnement onduleur délivré par un accélérateur d'électrons de type anneau de stockage comme celui de l'Installation Européenne de Rayonnement Synchrotron (ESRF) à Grenoble ; il pourra s'agir également d'une nouvelle source de rayonnement synchrotron de 4^{ième} génération comme le projet européen de construction à Hambourg d'un laser à électrons libres émettant dans le domaine des rayons X et désigné par l'acronyme X-FEL. A noter que les impulsions fournies par ces dispositifs présentent dans l'espace temps-fréquence un profil généralement gaussien.

Quelques chiffres significatifs caractérisent les types de sources de rayons X utilisés ici.

| | | |
|---|---|---|
| a. | Rayonnement Onduleur Monochromatique (ESRF) : | |
| | nombre de photons X par paquet | : 2,84.10³, |
| | surface éclairée : | |
| | - sans focalisation | : 3.10⁻⁴ cm², |
| | - avec focalisation | : 1.10⁻⁶ cm², |
| | durée d'une impulsion (paquet) | : 50 ps, |
| | fréquence RF de répétition | : 352,202 MHz. |
| b. | Rayonnement Onduleur Polychromatique (ESRF) : nombre de photons X par paquet : 1,42.10⁵, | |
| | surface éclairée sans focalisation : | 3. 10⁻⁴ cm². |
| c. | Laser à électrons libres (X-FEL / Hambourg) : nombre de photons X par paquet : 1.10¹², | |
| | surface éclairée | : 3,8.10⁻⁵ cm², |
| | durée d'une impulsion | : < 200 fs, |
| | fréquence de répétition | : < 5 MHz. |

### Résumé de l'invention

Un détecteur selon l'invention comprend un capteur semiconducteur aux bornes duquel on crée un régime de résistance différentielle négative. Dans le domaine micro-onde ou celui des ondes millimétriques, on connaît deux grandes classes de dispositifs semiconducteurs fonctionnant dans ce régime : la première utilise l'effet Gunn-Hilsum ; la seconde exploite l'effet Read-Johnston dans lequel des porteurs de charge sont générés par avalanche dans une jonction p-n (diode IMPATT : IMPact ionization Avalanche Transit-Time). Pour des raisons de simplicité, on ne décrira ici que des capteurs utilisant l'effet Gunn-Hilsum, mais on pourra aussi utiliser des capteurs à effet Read-Johnston. Dans des semiconducteurs (III-V ou II-VI) présentant une structure de bande appropriée comme GaAs, InP ou CdTe, il apparaît une résistance différentielle négative si on impose un champ électrique supérieur à un certain seuil critique (3,5 kV/cm pour GaAs ; 10,5 kV/cm pour InP ; 13,5 kV/cm pour CdTe). Il est connu qu'un tel dispositif pourra, selon la densité des porteurs de charge, se comporter en oscillateur (diode Gunn) ou en amplificateur dans le domaine de 1 à 300 GHz.

Le capteur convertit l'intensité des rayons X incidents en impulsions électriques pré-amplifiées dont la fréquence de répétition est imposée par la source de rayons X. Ce capteur a une fonction d'antenne (émettrice ou réceptrice). Cette antenne est couplée électriquement (voire magnétiquement) à un résonateur micro-onde permettant de sélectionner et d'amplifier dans une bande de fréquences étroite une composante harmonique sélectionnée. La résistance différentielle négative a pour effet d'amplifier les signaux micro-ondes. Le capteur pourra aussi être utilisé comme mélangeur ou amplificateur paramétrique susceptible de recevoir un signal micro-onde propre à interagir avec un harmonique amplifié du signal détecté pour constituer un récepteur hétérodyne ou super-hétérodyne de très haute sensibilité.

En résumé, la présente invention prévoit d'utiliser un capteur qui transforme un bref paquet de photons X en un nuage d'électrons dans des conditions telles qu'il y a amplification du nombre d'électrons. Des paquets périodiques de photons X sont envoyés dans le capteur. Le capteur est disposé dans un résonateur pour sélectionner et amplifier des signaux micro-ondes harmoniques engendrés par la répétition périodique des nuages d'électrons amplifiés. Un circuit de détection mesure lesdits harmoniques.

Plus particulièrement un mode de réalisation de la présente invention prévoit un détecteur de paquets périodiques de photons X, chaque paquet ayant une durée inférieure à 0,1 ns. Ce détecteur comprend un capteur comportant un élément semi-conducteur de type III-V polarisé dans une région de résistance différentielle négative, ce capteur étant disposé dans une cavité résonante accordée sur un multiple k de la fréquence de répétition F1 des paquets.

Selon un mode de réalisation de la présente invention, l'élément semiconducteur est en forme de disque, des électrodes de polarisation du capteur étant disposées en regard sur des faces opposées du disque, la résistivité du semiconducteur étant choisie suffisamment élevée pour que le capteur ne fonctionne pas en oscillateur.

Selon un mode de réalisation de la présente invention, des électrodes de polarisation sont disposées sur une même face de l'élément semiconducteur.

Selon un mode de réalisation de la présente invention, le semiconducteur a une résistivité supérieure à 10⁷ à 10⁸ Ω.cm.

Selon un mode de réalisation de la présente invention, au moins l'électrode destinée à fonctionner en cathode est transparente aux rayons X.

Selon un mode de réalisation de la présente invention, le capteur comprend en outre, du côté anode, une couche d'un semiconducteur III-V plus fortement dopée que le corps du disque semiconducteur, cette couche étant revêtue d'une première électrode d'anode et d'une deuxième électrode d'anode, la différence de potentiel entre la deuxième anode et la première anode étant propre à permettre la transmission amplifiée de domaines de Gunn entre les première et deuxième anodes.

Selon un mode de réalisation de la présente invention, le capteur comprend en outre une deuxième électrode de cathode en face de chaque deuxième électrode d'anode.

Selon un mode de réalisation de la présente invention, les première et deuxième cathodes et les première et deuxième anodes sont annulaires ou interdigitées.

Selon un mode de réalisation de la présente invention, la sortie dudit multiple k de la fréquence des paquets est amplifiée et envoyée à un mélangeur dont l'autre entrée reçoit un multiple k.F1 de la fréquence des paquets, dans lequel en outre les paquets de rayons X sont regroupés en trains de paquets périodiques à une fréquence f0 basse devant la fréquence F1 de répétition des paquets, le mélangeur fournissant la fréquence basse f0 qui est analysée dans un analyseur.

Selon un mode de réalisation de la présente invention, on envoie dans la cavité un signal de micro-ondes à une fréquence k.F1+IF voisine de la fréquence kF1 du kième harmonique de la fréquence F1 des paquets de rayons X, les paquets de rayons X étant regroupés en trains de paquets périodiques à une fréquence f0, et on extrait de la cavité un signal à une fréquence IF±f0, les signaux à la fréquence IF±f0 étant envoyés à la première entrée d'un mélangeur dont la deuxième entrée reçoit des signaux à la fréquence IF.

### Brève description des figures

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 est une vue en coupe illustrant un capteur selon un mode de réalisation de la présente invention ;
les figures 2A, 2B et 2C sont respectivement une vue en coupe, une vue de dessus et une vue de dessous d'un exemple d'un capteur selon un autre mode de réalisation de la présente invention ;
la figure 3A est une vue en coupe d'un exemple de capteur constituant une variante du capteur de la figure 2A et de son mode d'utilisation, la figure 3B est une vue de dessous, et la figure 3C est une vue en coupe d'une autre variante du capteur ;
la figure 4 combine une vue en coupe et en perspective d'un capteur selon un autre mode de réalisation de la présente invention ;
la figure 5 représente un exemple de réalisation d'un ensemble récepteur hétérodyne selon un premier mode d'utilisation de la présente invention ; et
la figure 6 représente un exemple de réalisation d'un ensemble récepteur super-hétérodyne selon un deuxième mode d'utilisation de la présente invention.

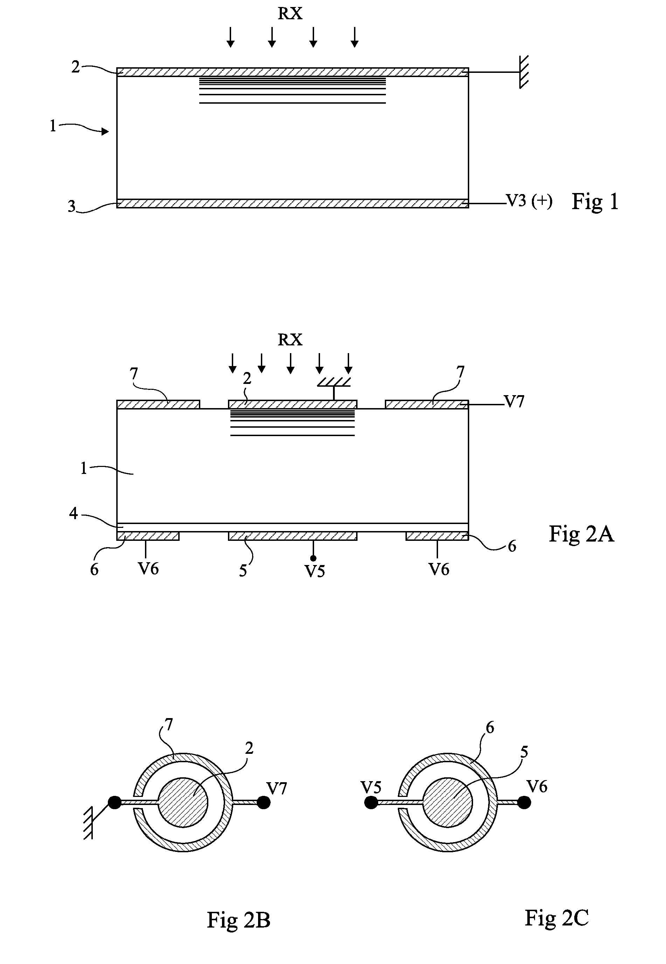

Comme cela est usuel dans le domaine de la représentation des microcomposants, les figures 1 à 4 ne sont pas tracées à l'échelle.

On retrouve dans plusieurs figures des éléments identiques ou similaires désignés par les mêmes références. Par souci de brièveté, la description de ces éléments ne sera pas répétée en relation avec chaque figure.

### Description détaillée

Dans la description détaillée de la présente invention, on supposera que l'effet Gunn-Hilsum est bien connu : il caractérise toute une classe de dispositifs globalement désignés par l'acronyme anglais TED (pour Transferred Electron Devices - dispositifs à transfert d'électrons). Un exemple générique est la diode Gunn : il s'agit d'un semiconducteur de type III-V qui, dans des conditions convenables de polarisation et de dimensions en rapport avec le niveau de dopage du semiconducteur, fonctionne en oscillateur et se comporte alors comme un dispositif à résistance différentielle négative. Si tous les TED ont une résistance différentielle négative, leur niveau de dopage n'est pas toujours suffisant pour atteindre le régime (instable) d'auto-oscillation : ils peuvent néanmoins fonctionner en régime (stable) d'amplificateur voire encore comme mélangeur hétérodyne ou amplificateur paramétrique dans le domaine de 1 à 300 GHz. L'invention utilise principalement ces dispositifs comme amplificateur et/ou mélangeur.

On s'intéresse ici à la détection de composantes harmoniques de très faible intensité et les dispositifs qui vont être décrits fonctionnent tous en régime d'amplification et/ou de récepteur hétérodyne.

### Capteur - premier mode de réalisation

La figure 1 représente un exemple de capteur selon un mode de réalisation de la présente invention. Le capteur est constitué d'un disque 1 en un matériau semiconducteur de type III-V, par exemple de l'arséniure de gallium ou du phosphure d'indium, disposé entre deux électrodes, une électrode de face avant 2 et une électrode de face arrière 3. L'électrode de face arrière ou anode 3 est portée à un potentiel V3 fortement positif par rapport à l'électrode de face avant ou cathode 2. Le matériau semiconducteur est de type semi-isolant et présente une résistivité élevée, par exemple supérieure à 10⁷ à 10⁸ Ω.cm. La polarisation est ajustée de sorte que, au repos, le champ électrique uniforme dépasse largement le champ de seuil de l'effet Gunn-Hilsum. Si le potentiel de l'électrode de face avant est la masse, l'électrode de face arrière est portée à un potentiel V3 permettant d'appliquer au dispositif un champ électrique de l'ordre de 15 à 35 kV/cm. Le diamètre du capteur est adapté à la surface éclairée par le faisceau de rayons X incident, éventuellement focalisé. Le disque peut avoir un diamètre de 2 mm. Son épaisseur correspond à une épaisseur standard de tranche semiconductrice (quelques centaines de µm).

Les électrodes 2 et 3 forment avec le matériau semi-conducteur un contact ohmique. Le matériau et l'épaisseur de l'électrode de face avant sont choisis pour qu'elle soit sensiblement transparente aux rayons X. Il s'agira par exemple d'un film mince d'AuGe ou d'AuGeNi d'une épaisseur de l'ordre de 100 nm. Dans ces conditions, aucun phénomène particulier ne se produit entre les électrodes d'anode et de cathode. Plus précisément, en raison de la forte résistivité du matériau semi-conducteur, il n'apparaît aucun phénomène de type auto-oscillation comme dans une diode Gunn.

Le capteur est soumis à un flux de rayons X (RX) incidents du côté de la face avant. Ces photons X ayant une énergie de 2 à 20 keV, par exemple 8,4 keV, traversent avec une absorption négligeable l'électrode de cathode pour être absorbés dans les premiers micromètres de l'épaisseur du corps semiconducteur 1. Ceci est illustré dans la figure par des traits de moins en moins serrés, la partie plus serrée correspondant à la zone dans laquelle statistiquement le plus grand nombre de photons X sera absorbé. Lors de leur absorption, ces photons X créent dans le semiconducteur des paires électron-trou. On notera qu'il existe un premier effet multiplicateur du fait de l'énergie des rayons X, à savoir que chaque photon X crée un grand nombre de paires électron-trou : par exemple, on aura un facteur multiplicateur de 2000 pour des photons de 8,4 keV pour lesquels la longueur moyenne d'absorption dans GaAs est 3.10⁻³ cm.

Dans le cas du flux de photons X délivré par les onduleurs de l'ESRF et pour un volume effectif de photo-ionisation d'environ 9.10⁻⁷ cm³, un faisceau non focalisé de rayons X monochromatiques ne pourra pas créer dans ce volume une densité d'électron-trou supérieure à 6,3.10¹² cm⁻³. On pourra atteindre une densité de porteurs de charge de l'ordre de 10¹⁴ cm⁻³ en utilisant un faisceau focalisé de rayons X monochromatiques (2,1.10¹⁴ cm⁻³), ou encore un rayonnement onduleur polychromatique (3,1.10¹⁴ cm⁻³). Avec le laser à électrons libres (X-FEL) de Hambourg, il faudra atténuer le faisceau RX incident, par exemple avec un filtre métallique de 25 µm d'or, pour ne pas dépasser la limite supérieure de la densité de porteurs de charge, soit 10¹⁷ cm⁻³_{.}

La tension de polarisation V3 du dispositif est choisie pour que l'on ait toujours aux bornes du volume utile un champ électrique supérieur au champ critique de l'effet Gunn-Hilsum. Même si la densité de porteurs de charge est insuffisante pour atteindre le régime d'auto-oscillation, il existe dans la zone considérée une résistance différentielle négative qui se traduit par un temps de relaxation diélectrique négatif. Il en résulte une amplification de la densité excédentaire d'électrons créés par photo-ionisation. On notera que cette amplification est large bande.

Les trous produits dérivent vers la cathode tandis que les électrons sont attirés par l'anode. Eux seuls sont sensibles à l'effet d'amplification. Toutefois, ils n'atteignent jamais l'anode dans les hypothèses prises précédemment. En effet, le temps de transit des électrons sur 300 µm (épaisseur minimum du disque semiconducteur) est de plusieurs dizaines de nano-secondes : ceci est beaucoup trop long par rapport à la durée de vie du plasma d'électrons créés par photo-ionisation, qui est d'environ 0,4 à 1 nanoseconde.

L'absorption d'un paquet de photons X dans le capteur décrit en relation avec la figure 1 produit ainsi une impulsion électrique auto-amplifiée dont la durée de vie sera de 400 à 1000 ps. Etant donné que les paquets de photons X se répètent à une fréquence F1, il y a conversion des paquets de photons X en impulsions électriques amplifiées à une fréquence de répétition F1, laquelle se situe dans la bande des radio-fréquences.

Comme le capteur est excité par une impulsion de rayons X de très courte durée (50 ps), sa réponse harmonique contient aussi des harmoniques N x F1 de rang N élevé dans le domaine des micro-ondes, voire des ondes millimétriques.

### Capteur - autres modes de réalisation

Les figures 2A, 2B et 2C sont respectivement une vue en coupe, une vue de dessus et une vue de dessous d'un capteur selon un deuxième mode de réalisation de la présente invention. Sur la face inférieure du disque semiconducteur 1, on a formé, par exemple par épitaxie, une couche mince 4 du même semiconducteur que celui du disque. La couche 4 a une épaisseur dans la plage d'environ 2 à environ 5 µm, par exemple 3 µm. Dans cette couche 4, la densité des porteurs de charge est de l'ordre de 3 à 5.10¹⁶ cm⁻³ et est très supérieure à celle du corps semi-conducteur 1 qui est seulement d'environ 10⁸ cm⁻³ pour une résistivité supérieure à 10⁷ Ω.cm. La résistivité de la couche 4 est par exemple de l'ordre de 0,1 Ω.cm. Comme l'illustre la vue de dessus de la figure 2B, sur la face avant, l'électrode de cathode 2 ne couvre plus toute la superficie du disque. Sur la face arrière, directement en regard de l'électrode de cathode, une électrode 5 appelée ci-après première anode est déposée sur la couche mince 4. Comme le montre en vue de dessous la figure 2C, une électrode périphérique 6, concentrique à l'électrode de première anode 5, est également formée sur la couche 4. L'électrode 6 sera appelée ci-après deuxième anode.

La distance séparant la première anode de la deuxième anode pourra varier de 15 à 150 µm selon le besoin des applications envisagées. La première anode 5 sera portée à un potentiel V5 choisi sensiblement comme le potentiel V3 mentionné en relation avec la figure 1. La deuxième anode 6 sera portée à un potentiel V6 supérieur à V5. La différence de potentiel V6-V5 est ajusté de sorte que le champ électrique entre première et deuxième anode soit très peu inférieur au champ critique de l'effet Gunn-Hilsum. Les électrodes de deuxième anode et de cathode (AuGe) forment des contacts ohmiques avec le semiconducteur. L'électrode de première anode forme un contact de type Schottky avec la couche mince 4. En regard de l'électrode de deuxième anode, sur la face avant, on pourra former une autre électrode (AuGe) 7 portée à un potentiel V7 négatif par rapport à celui de la cathode 2, par exemple à un potentiel V7 = V5-V6. Le rôle de l'électrode 7 est d'imposer aux électrons créés par photo-ionisation dans le corps semiconducteur 1 de dériver vers la première anode et non vers la deuxième anode.

Quand l'électrode de cathode du capteur de la figure 2A est traversée par un flux de rayons X, il se développe dans le corps semiconducteur 1 entre la cathode et la première anode les mêmes mécanismes que ceux qui ont été détaillés en relation avec le capteur de la figure 1. De plus l'abaissement du champ électrique dans le volume effectif où se crée le plasma d'électron-trou est compensé par une augmentation du champ électrique hors de ce volume. Cela entraîne une augmentation du champ électrique en particulier dans la zone désertée localisée sous la première anode 5. Cette perturbation de champ électrique initie la nucléation dans la couche 4 d'un domaine de Gunn dérivant de la première anode vers la deuxième anode en s'amplifiant très rapidement du fait de la très haute densité des porteurs de charge dans la couche 4.

Ainsi, le processus de photo-ionisation provoqué par l'absorption d'un paquet de photons X conduit à deux impulsions électriques dont le déclenchement est synchrone mais qui dérivent selon des directions orthogonales. Par ailleurs, leurs durées de vie seront différentes. Il existerait un processus de relaxation rapide du champ excédentaire à une échelle de temps de 30 picosecondes : lorsque le champ électrique repasse en dessous du champ critique de l'effet Gunn-Hilsum, non seulement cesse toute chance de nucléation de nouveaux domaines de Gunn, mais surtout le temps de relaxation diélectrique redevient positif et cause cette fois l'atténuation rapide de l'impulsion (pourtant amplifiée durant les 30 picosecondes antérieures). Si la première impulsion créée entre cathode et première anode n'a aucune chance d'atteindre la première anode, de même, la seconde impulsion créée entre première et deuxième anode n'a guère plus de chance d'atteindre la deuxième anode. En revanche, ce processus impulsionnel rapide est de nature à favoriser une réponse fréquentielle riche en harmoniques de rang élevé, ce qui est un des buts recherchés.

Le capteur de la figure 2 pourrait éventuellement être soumis à un flux de rayons X arrivant en incidence normale sur l'électrode de première anode de la face inférieure, choisie pour être transparente aux rayons X.

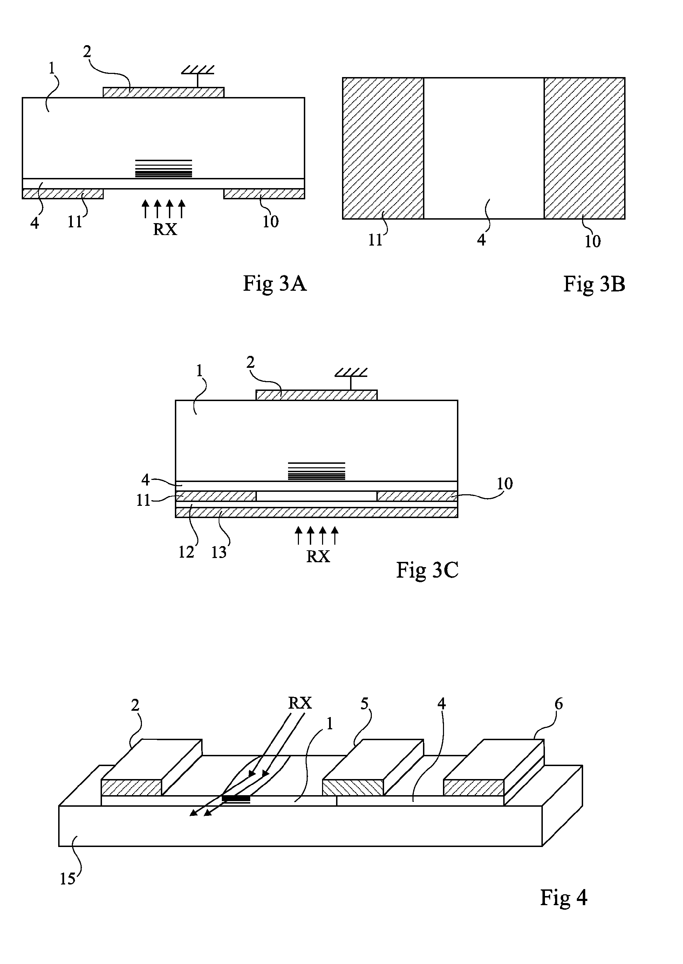

La figure 3A est une vue en coupe d'un exemple de capteur constituant une variante du capteur de la figure 2A et de son mode d'utilisation, la figure 3B est une vue de dessous, et la figure 3C est une vue en coupe d'une autre variante du capteur. Ces exemples sont plus particulièrement adaptés à une irradiation par la face inférieure.

Comme le montrent la figure 3A et la figure 3B qui est une vue de dessous correspondant à la figure 3A, le capteur comporte une pièce 1 en un matériau semiconducteur de type III-V. Du côté de la face inférieure, on dépose une couche mince analogue à la couche mince 4 de la figure 2. Des électrodes espacées 10 et 11 sont disposées en regard sur des régions de couche mince. Une électrode de face avant 2 est disposée au moins en face de l'intervalle entre les électrodes 10 et 11 et forme une cathode. Les électrodes de face arrière 10 et 11 forment des anodes, respectivement à des potentiels V10 et V11. L'un de ces potentiels, par exemple V11, est supérieur à l'autre de telle sorte qu'en l'absence de rayons X, on crée entre ces deux électrodes un champ planaire très légèrement inférieur au champ critique de l'effet Gunn-Hilsum.

L'ensemble des anodes 10 et 11 crée avec l'électrode de cathode 2 un champ dont la composante principale est verticale. Ces deux électrodes jouent ensemble à cet égard le rôle de la première anode des modes de réalisation précédents.

Des rayons X arrivent sur la face inférieure dans une région comprise entre les anodes 10 et 11. La longueur d'atténuation des rayons X étant de l'ordre de 30 µm, la majorité des paires électron-trou sera créée dans le semiconducteur 1 mais au voisinage de la couche épitaxiée 4. Les électrons seront accélérés par une composante de champ électrique transverse (de la cathode 2 vers l'anode 11 au potentiel le plus élevé). Du fait de cette accélération transverse, l'impulsion électrique créée par photo-ionisation bénéficie ici aussi d'une amplification convective à large bande, exactement comme dans le cas d'un capteur réalisé selon le mode de la figure 1 ou encore celui de la figure 2A. L'amplification convective va devenir plus rapide et plus efficace dès que les électrons vont pénétrer dans la couche épitaxiée 4 où la haute densité des porteurs de charge favorise l'amplification.

Il existe en outre au voisinage de la couche épitaxiée 4 une composante de champ électrique planaire (de l'anode 11 vers l'anode 10). En dehors du nuage d'électrons créé par photo-ionisation, il y aura augmentation du champ électrique qui pourra alors devenir légèrement supérieur au seuil critique de l'effet Gunn-Hilsum, en particulier en direction de l'anode 11. Il pourra ainsi se créer dans la couche à haut niveau de dopage 4 un domaine de Gunn dérivant vers l'anode 11 pendant toute la durée de vie du plasma de photo-électrons. Comme on sait qu'il ne peut se développer simultanément deux domaines de Gunn, les deux processus d'amplification devront finalement s'auto-contrôler pour aboutir, en définitive, à une plus forte amplification de la conversion des photons X en une impulsion électrique dérivant dans un espace à 2 dimensions.

La figure 3C est une vue en coupe illustrant une variante du montage de la figure 3A dans laquelle on recouvre les deux anodes 10 et 11 d'un film isolant 12, par exemple de polyimide (Kapton : épaisseur 25 µm), dont la face externe est revêtue d'une couche conductrice 13, par exemple de l'aluminium et portée au même potentiel que l'anode 10 (V13=V10).

La figure 4 représente une version planaire d'un capteur correspondant au mode de réalisation de la figure 2A. Le capteur est réalisé sur une plaquette étroite 15 (80 mm x 4 mm) découpée dans une tranche d'épaisseur standard (340 µm) de semi-conducteur constituant un substrat approprié. Deux couches minces, respectivement 1 et 4, du même semi-conducteur et d'épaisseurs sensiblement voisines, sont formées sur le substrat. La couche 1 est semi-isolante et présente une résistivité supérieure à 10⁷ Ω.cm. La couche 4 correspond à un niveau de dopage beaucoup plus élevé conduisant à une densité de porteurs de charge de l'ordre de 3 à 5.10¹⁶ cm⁻³ comme la couche 4 du capteur de la figure 2A. Trois électrodes sont déposées en surface : une cathode 2 mise à la terre, une première anode 5 formant un contact de type Schottky avec la couche semiconductrice 4 et portée au potentiel V5, et une deuxième anode 6 portée au potentiel V6. Un faisceau de rayons X convenablement focalisé (RX) éclairera sous une incidence rasante (4 à 6°) la couche mince 1 entre cathode et première anode. Les rayons X arrivent sous incidence très rasante pour pouvoir être totalement absorbés dans la couche mince 1 et assurer un meilleur contraste dans la formation du plasma électron-trou.

### Cavité

Le capteur décrit précédemment est disposé dans une cavité résonante micro-onde accordée sur un harmonique k.F1 de la fréquence de répétition F1 des paquets de photons X.

Dans le cas d'une source ayant les caractéristiques de celle de l'ESRF, on choisira par exemple de détecter l'harmonique 24 de la fréquence F1. Le capteur se comportera comme une antenne micro-onde émettrice si le dipôle électrique, formé dans le capteur, orienté selon la direction de déplacement des charges électriques, et oscillant à la fréquence k.F1, coïncide avec un maximum de champ électrique du mode de résonance de la cavité. Le capteur peut être fixé sur une tige en saphir présentant des pertes diélectriques minimes. Les rayons X peuvent être introduits par une fenêtre en béryllium d'épaisseur 50 µm totalement transparente aux rayons X, mais assurant la continuité électrique des parois métalliques de la cavité.

On notera que le rôle de la cavité n'est pas uniquement celui d'un filtre fréquentiel. Après une phase transitoire dont la durée dépend du facteur de surtension de la cavité (par exemple 30 ns si Q = 1000), il s'établit dans la zone active du capteur une tension oscillant à la fréquence micro-onde (k.F1) qui se superpose à la tension de polarisation statique. Ce signal micro-onde est lui-même amplifié du fait de la résistance différentielle négative associée à l'effet Gunn-Hilsum. Il se développe alors un régime d'amplification résonante. On notera que cette amplification est à bande de fréquence très étroite.

Pour un capteur du type de celui de la figure 1, la cavité résonante micro-onde pourra être une cavité réalisée en bande X à partir d'un tronçon de guide d'onde rectangulaire standard résonant dans le mode TE₁₀₂. La fréquence de résonance de la cavité peut être accordée avec précision grâce à un court-circuit mobile tandis qu'un iris de dimension optimisée permet de coupler la cavité à un circuit de détection.

Avec des capteurs du type décrit en relation avec les figures 2A ou 3A, les antennes correspondantes ne peuvent plus se coupler au champ électrique d'une cavité résonante en guide rectangulaire. Dans le cas des capteurs à symétrie radiale illustrés par les figures 2B et 2C, il est souhaitable d'utiliser une cavité résonante cylindrique résonant dans le mode TE₀₁₁ ou le mode TE₀₁₂ qui offrent aussi une symétrie radiale de la distribution de champ électrique. Cette considération prévaut tout autant dans le cas où l'on aurait des électrodes interdigitées.

Pour un capteur du type de celui de la figure 4, les impulsions électriques générées entre cathode et première anode ou entre première anode et deuxième anode dérivent selon le même axe et dans le même sens. On pourra donc coupler électriquement un tel capteur à une cavité à section rectangulaire standard et résonant dans le mode TE₁₀₁.

Si les rayons X sont polarisés circulairement, une faible partie des électrons créés dans le capteur aura une polarisation de spin. Comme le suggèrent Yunong Qi, Zhi-G. Yu et M. E. Flatté dans "Spin-Gun Effect", Phys. Rev. Letter 96, 026602 (2006), cette polarisation de spin devrait être amplifiée par effet Gunn. La présente invention, et plus particulièrement le mode de réalisation de la figure 3, devrait permettre de vérifier l'exactitude de cette théorie. La présence d'électrons dont une majorité présente une polarisation de spin privilégiée se traduit par la présence d'un dipôle magnétique oscillant qui pourra être détecté par résonance magnétique dans une cavité micro-onde couplée magnétiquement au dipôle oscillant.

### Circuit de détection

La puissance rayonnée par une antenne micro-onde telle que décrite précédemment reste très faible et ne dépasse guère quelques nanowatts. Par ailleurs, la température de bruit (ou le rapport d'amplification du bruit électronique) d'un amplificateur à effet Gunn-Hilsum est médiocre. Il faut donc non seulement prévoir des circuits de mesure sensible, mais aussi réduire la bande passante du bruit électronique.

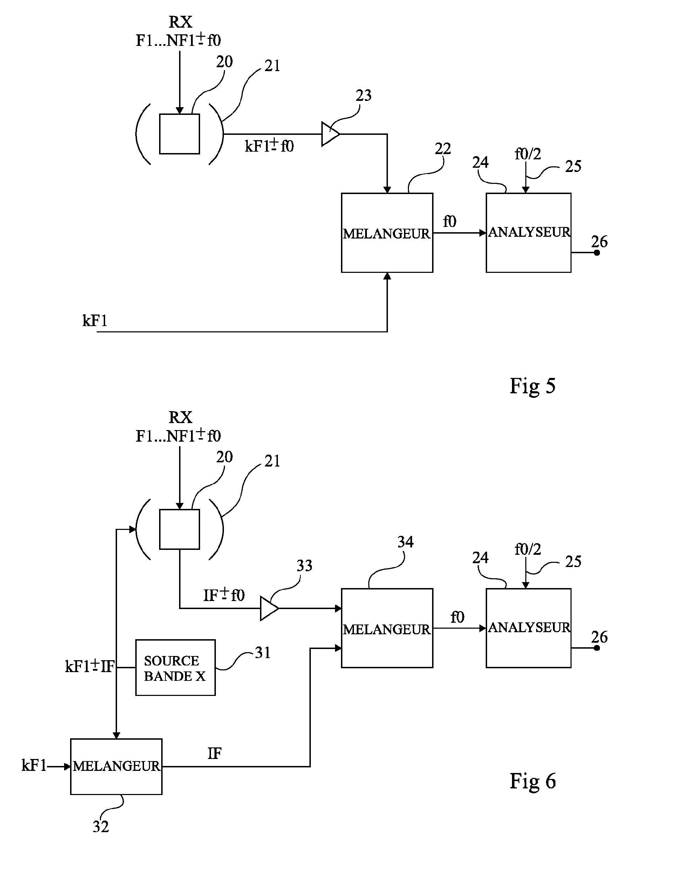

Les figures 5 et 6 illustrent deux exemples de réalisation d'une détection hétérodyne adaptée à l'utilisation des capteurs de la présente invention. Dans ces figures, un capteur (TED) tel que décrit précédemment, ou analogue, désigné de façon générale par la référence 20, est inséré dans une cavité résonante 21 accordée sur l'harmonique k.F1 de la fréquence F1 de répétition des paquets de photons X. On considère que les trains de paquets de rayons X présentent une modulation d'amplitude à une fréquence f0 faible devant la fréquence F1, et a fortiori devant la fréquence k.F1. Par exemple, dans le cas de la source de rayonnement synchrotron de l'ESRF, les trains de paquets de rayons X présentent une modulation d'amplitude à la fréquence f0 = F1/992 = 355 kHz qui est la fréquence de répétition cyclique des électrons dans l'anneau de stockage. Cette modulation parfaitement synchrone de la fréquence F1 de l'accélérateur a pour origine un remplissage (volontairement) incomplet des 992 paquets d'électrons qui génèrent le rayonnement synchrotron. Une conséquence de cette modulation d'amplitude à la fréquence f0 est l'apparition dans l'espace des fréquences de deux satellites correspondant aux fréquences k.F1+f0.

Dans l'exemple illustré en figure 5, la sortie (k.F1+f0) de la cavité est envoyée à une première entrée d'un mélangeur micro-onde 22 par l'intermédiaire d'un amplificateur micro-onde 23 à très faible bruit électronique (LNA : Low Noise Amplifier). Une deuxième entrée du mélangeur 22 reçoit un signal de référence à la fréquence k.F1. Le mélangeur 22 est prévu pour que sa sortie soit un signal à la fréquence f₀ dont l'amplitude est proportionnelle à l'amplitude des satellites de modulation aux fréquences k.F1+f0. Ce signal est mesuré à l'aide d'un analyseur vectoriel de spectres 24 à grande gamme dynamique, par exemple plus de 150 dBc. Cet analyseur reçoit aussi un signal de déclenchement synchrone 25, par exemple à la fréquence f0/2, et fournit sur sa sortie un signal caractéristique de l'amplitude du k-ième harmonique de la fréquence F1.

L'approche illustrée par la figure 6 exploite toutes les fonctionnalités du capteur à effet Gunn-Hilsum. Plus précisément, on l'utilise ici comme mélangeur-amplificateur ou amplificateur paramétrique dans le domaine micro-onde ou des ondes millimétriques.

En figure 6, la cavité résonante 21 contenant le capteur 20 est excitée par un générateur micro-onde 31 à la fréquence k.F1±IF. Le décalage de fréquence IF sera choisi de manière arbitraire dans la gamme de 1 à 10 MHz, par exemple 2 MHz. Un mélangeur micro-onde 32 reçoit la sortie du générateur 31 et un signal de référence à la fréquence k.F1 et fournit un signal de référence à la fréquence intermédiaire IF. Par ailleurs, dans la cavité résonante 21, la fonction mélangeur micro-onde du capteur 20 va se traduire par l'apparition d'un signal aux fréquences intermédiaires de battement IF±F0. Ce signal basse fréquence pourra être capté directement sur une électrode du capteur et est appliqué à un amplificateur approprié à très faible bruit 33 avant d'être injecté sur une première entrée d'un multiplieur analogique de précision 34 (mélangeur IF), dont l'autre entrée reçoit le signal de référence IF. Ce dispositif joue ainsi le rôle de démodulateur super-hétérodyne. L'analyse du signal de sortie à la fréquence f0 pourra à nouveau s'effectuer dans un analyseur vectoriel de spectres 24 comme dans le cas de la figure 5.

La détection illustrée par la figure 6 présente de nombreux avantages. Un premier avantage est que l'amplification interne au capteur du signal de battement IF±F0 par effet de résistance différentielle négative est très efficace. Un deuxième avantage est que le signal de battement est proportionnel à l'intensité du signal micro-onde du générateur externe (par exemple quelques dizaines de milliwatts) : ceci introduit un facteur multiplicatif (gain) important et de très faible bruit. Un troisième avantage est que ce mode de détection peut être facilement étendu jusqu'au domaine des ondes millimétriques (300 GHz) alors que la disponibilité d'un amplificateur 22 à large gain et très faible bruit (cf. figure 5) pose problème aux très hautes fréquences (ce qui n'est pas le cas de l'amplificateur 33).

D'une manière générale, d'autres variantes de réalisation des capteurs, du résonateur micro-onde et du circuit électronique de détection apparaîtront à l'homme de l'art, dans le cadre de la présente invention telle qu'exposée ici en relation avec des modes de réalisation spécifiques pour une application choisie.

On a décrit ici un détecteur permettant d'analyser un harmonique de la fréquence de répétition d'un train de paquets de photons X. Pour faire une étude plus complète d'un phénomène d'absorption, de diffusion ou de diffraction de rayons X, par un échantillon, on pourra utiliser plusieurs détecteurs réglés sur des harmoniques différents de la fréquence fondamentale de répétition des paquets de façon à obtenir plusieurs points de la transformée de Fourier du signal à analyser et à remonter avec plus de précision au signal temporel.

Par ailleurs, on a décrit plus particulièrement des exemples d'application de la présente invention adaptés au rayonnement synchrotron de l'ESRF de Grenoble. La fréquence de répétition étant alors de 352,202 MHz, on s'intéresse par exemple à l'harmonique 24 qui se trouve dans le domaine des micro-ondes. Si on s'intéressait par exemple au cas où la source est un laser à électrons libres de type X-FEL dont la fréquence de répétition est de l'ordre de 5 MHz, on choisirait de préférence un harmonique beaucoup plus élevé, par exemple un harmonique d'ordre supérieur à 2000 pour arriver à des fréquences supérieures à 10 GHz.

Bien entendu de nombreuses variantes de réalisation du capteur, du résonateur et du circuit électronique de détection apparaîtront à l'homme de l'art, dans le cadre de la présente invention telle qu'exposée ici en relation avec des modes de réalisation particuliers.

## Revendications

1. Détecteur de paquets périodiques de photons X, chaque paquet ayant une durée inférieure à 0,1 nanoseconde, comprenant un capteur (20) comportant un élément semiconducteur de type III-V polarisé dans une région de résistance différentielle négative, ledit capteur étant disposé dans une cavité résonante (21) accordée sur un multiple (k) de la fréquence de répétition (F1) des paquets.

2. Détecteur selon la revendication 1, dans lequel ledit élément semiconducteur est en forme de disque, des électrodes (2, 3) de polarisation du capteur étant disposées en regard sur des faces opposées du disque, la résistivité du semi-conducteur étant choisie suffisamment élevée pour que le capteur ne fonctionne pas en oscillateur.

3. Détecteur selon la revendication 1, dans lequel des électrodes de polarisation sont disposées sur une même face de l'élément semiconducteur.

4. Détecteur selon l'une quelconque des revendications 1 à 3, dans lequel le semiconducteur a une résistivité supérieure à 10⁷ à 10⁸ Ω.cm.

5. Détecteur selon la revendication 2 ou 4, dans lequel au moins l'électrode destinée à fonctionner en cathode (3) est transparente aux rayons X.

6. Détecteur selon la revendication 1, 2, 4 ou 5, dans lequel le capteur comprend en outre, du côté anode, une couche (4) d'un semiconducteur III-V plus fortement dopée que le corps du disque semiconducteur (1), cette couche étant revêtue d'une première électrode d'anode (5) et d'une deuxième électrode d'anode (6), la différence de potentiel (V6-V5) entre la deuxième anode et la première anode étant propre à permettre la transmission amplifiée de domaines de Gunn entre les première et deuxième anodes.

7. Détecteur selon la revendication 6, dans lequel le capteur comprend en outre une deuxième électrode de cathode (7) en face de chaque deuxième électrode d'anode (6).

8. Détecteur selon la revendication 6, dans lequel les première (2) et deuxième (7) cathodes et les première (5) et deuxième (6) anodes sont annulaires ou interdigitées.

9. Détecteur selon l'une quelconque des revendications 1 à 8, dans lequel la sortie dudit multiple (k) de la fréquence des paquets est amplifiée et envoyée à un mélangeur (22) dont l'autre entrée reçoit un multiple k.F1 de la fréquence des paquets, dans lequel en outre les paquets de rayons X sont regroupés en trains de paquets périodiques à une fréquence (f0) basse devant la fréquence (F1) de répétition des paquets, le mélangeur fournissant la fréquence basse (f0) qui est analysée dans un analyseur (26).

10. Détecteur selon l'une quelconque des revendications 1 à 8, dans lequel on envoie dans la cavité un signal de micro-ondes à une fréquence k.F1+IF voisine de la fréquence kF1 du kième harmonique de la fréquence F1 des paquets de rayons X, les paquets de rayons X étant regroupés en trains de paquets périodiques à une fréquence (f0), et on extrait de la cavité un signal à une fréquence IF±F0, les signaux à la fréquence IF±F0 étant envoyés à la première entrée d'un mélangeur (34) dont la deuxième entrée reçoit des signaux à la fréquence IF.
